# FASCICULE DE BREVET EUROPEEN

(11) **EP 2 961 786 B1**
(45) Date de publication et mention de la délivrance du brevet: **10.05.2017**
(21) Numéro de dépôt: 14708514.6
(22) Date de dépôt: 25.02.2014
(51) Int. Cl.: C08G 63/08, C08G 63/90

(54) **NOUVEAU PROCÉDÉ DE PURIFICATION DE POLYESTERS**
NEUARTIGES VERFAHREN ZUR REINIGUNG VON POLYESTER
NOVEL METHOD FOR PURIFYING POLYESTERS

(30) Priorité: 26.02.2013 FR 1351657
(43) Date de publication de la demande: 06.01.2016
(73) Titulaire: IPSEN PHARMA S.A.S., 92100 Boulogne-Billancourt (FR)
(72) Inventeur: BOURISSOU, Didier, 31830 Plaisance du Touch (FR); MARTIN-VACA, Blanca, 31100 Toulouse (FR); THILLAYE DU BOULLAY, Olivier, 81600 Montans (FR)
(74) Mandataire: Biechy, Aurélien Roger
(86) Numéro de dépôt international: PCT/EP2014/053600
(87) Numéro de publication internationale: WO 2014/131747

(56) Documents cités:
- WO-A2-2012/066194
- US-A- 5 338 822
- US-A- 6 160 173

## Description

La présente invention concerne un nouveau procédé de purification de polyesters contenant des impuretés. La présente invention concerne également un nouveau procédé de préparation de polyesters.

De nos jours, une attention croissante est portée aux polymères synthétiques pour l'élaboration d'organes artificiels et la formulation de médicaments [Chem. Eng. News 2001, 79 (6), 30]. Les polymères concernés doivent respecter un certain nombre de critères et, en particulier, ils doivent être biocompatibles. Le caractère biodégradable est un avantage supplémentaire si le polymère doit être éliminé après une période appropriée d'implantation dans un organisme. A cet égard, les polyesters, et notamment les copolymères à base d'acide lactique et glycolique (PLGA) présentent un très grand intérêt car ils sont sensibles à l'hydrolyse et sont dégradés *in vivo* avec libération de sous-produits non-toxiques. Le champ d'application des PLGA est très vaste (Adv. Mater. 1996, 8, 305 et Chemosphere 2001, 43, 49). Dans le domaine chirurgical, ils sont utilisés pour la synthèse de fils multi-brins, de sutures, d'implants, de prothèses... En pharmacologie, ils permettent l'encapsulation, le transfert et la libération contrôlée de principes actifs.

Néanmoins et de façon générale la stabilité de ces polyesters peut être altérée par la présence d'impuretés et notamment de monomère résiduel. Ces impuretés proviennent du procédé de synthèse de ces polyesters.

Plus particulièrement, la stabilité des polymères pour des applications médicales est primordiale afin de limiter au maximum la dégradation prématurée du système et les effets délétères qui peuvent en résulter.

En particulier, il est connu que la présence de lactide résiduel dans un PLA (ou un PLGA) a une influence directe sur les propriétés du polymère.

Cela peut avoir un impact sur :
- les propriétés mécaniques du polymère et en particulier une diminution de l'élasticité ;
- la mise en oeuvre. En effet, à la fin de la synthèse du polymère, généralement effectuée à haute température, le lactide résiduel peut sublimer pendant l'extrusion et venir contaminer l'outil industriel ;
- la stabilité du polymère. En présence d'humidité, le lactide est facilement hydrolysé et l'acide lactique généré, du fait de la diminution locale du pH, autocatalyse la dégradation du PLA ;
- la formation de nouveaux sous-produits dans les formulations. Le lactide peut réagir avec des fonctions du principe actif présentant des fonctions nucléophiles (notamment des fonctions amines primaires) pour former les lactyl-lactates correspondants.

Cet effet est également observé chez les autres polyesters tels que par exemple, le polycaprolactone.

La préparation des PLAs par les procédés industriels courants (haute température, sans solvant et en présence de sels d'étain) s'accompagne inévitablement d'un taux de lactide résiduel de l'ordre de 2 à 5%. En effet la réaction de polymérisation du lactide est équilibrée et il est donc impossible de consommer la totalité du monomère.

Plusieurs techniques sont connues pour diminuer le taux de lactide résiduel des PLAs de hauts poids moléculaires. La demande de brevet US5496923 propose de soumettre le polymère fondu à une pression réduite. Le lactide résiduel est éliminé par sublimation.

Dans la demande de brevet EP 2 221 333, le polymère fondu est balayé par un courant gazeux sec entraînant le lactide résiduel hors du réacteur.

Mais ces deux techniques présentent l'inconvénient de conserver le catalyseur (neutralisé ou non) dans le polymère final.

Or le catalyseur de polymérisation peut aussi catalyser la dépolymérisation, et donc la formation de lactide.

Dans la demande de brevet US 2011021742 le polymère à l'état solide, divisé en grains, est mis en contact avec un solvant (notamment de l'*iso*propanol) entraînant le lactide jusqu'à épuisement. En outre, l'addition d'acide lactique permet également l'élimination du catalyseur.

Tous ces procédés conduisent à des PLAs avec des taux de lactide résiduel supérieurs à 0,2%.

WO2007/088135 divulgue un procédé dans lequel le polymère est solubilisé dans un solvant (dichlorométhane, acétone) puis est re-précipité par addition de la solution sur un large volume de non-solvant (méthanol, eau). La solution contenant le lactide est éliminée. Cette dernière méthode permet d'obtenir des taux de lactide résiduel inférieurs aux limites de détections (<0,01%) et est généralement utilisée pour les polymères à visées pharmaceutique et médicale.

Cependant, ces méthodes présentent plusieurs inconvénients : utilisation de conditions drastiques (hautes températures, vide poussé) et/ou de grandes quantités de solvants.

La mise au point d'un procédé permettant à la fois d'obtenir des polyesters présentant un faible taux de monomère résiduel tout en utilisant des méthodes « douces » d'un point de vue économique et environnemental constitue un enjeu majeur.

Le problème que résout la présente invention est de mettre au point un procédé industrialisable permettant de ramener le taux de monomère résiduel dans les polymères à des valeurs inférieures à 0,1%, et même inférieures à 0,06%.

La déposante propose donc un nouveau procédé de purification de polyesters, qui permet d'obtenir un faible taux de monomère(s) résiduel tout en respectant les propriétés originales du polymère et en proposant des conditions de réactions économiquement et environnementalement intéressantes.

La présente invention a donc pour objet un procédé de purification de polyester comprenant des impuretés, ces impuretés contenant au moins 0,1% en poids de polyester du ou des monomères résiduels. La présente invention comprenant au moins l'étape de :
(ii) ajouter au polyester dans un solvant un matériau fonctionnalisé choisi parmi une résine fonctionnalisée par une ou des fonctions amine primaire et/ou secondaire.

Par polyester, on entend un polymère dont au moins un motif contient une fonction ester. Par exemple, on entend les polycaprolactones (PCL), les polymères d'acide lactique (PLA), les polymères d'acide lactique et glycolique (PLGA), les polymères d'acide glycolique (PGA).

Par solvant, on entend tout solvant ou mélange de solvants approprié. De préférence, le solvant ou mélange de solvants est tel que le polyester y est soluble. De préférence, le solvant est choisi parmi les solvants halogénés, les cétones (telles que l'acétone, la méthyléthyl cétone (MEK), la méthylisobutylcétone (MIBUK)), les éthers cycliques (le THF, le méthylTHF) et les solvants aromatiques. Par exemple, le solvant est choisi parmi le dichlorométhane, le dichloroéthane, le chloroforme et le toluène. De préférence, le solvant est le dichlorométhane.

Par impuretés, on entend notamment toute impureté résultant du procédé de synthèse du polyester, par exemple un catalyseur ou un monomère qui n'a pas été consommé par la réaction.

Par exemple, on entend un polyester comprenant au moins de 0,1 à 1,0% d'impuretés en poids total de polyester et de préférence de 0,2 à 0,5% d'impuretés en poids total de polyester.

Par résine, on entend toute résine synthétique ou naturelle, stable chimiquement, pouvant servir de support à l'espaceur et/ou à la ou les fonctions greffées dans la présente invention. Par exemple, la résine peut être une résine polystyrène, ou polystyrène-divinylbenzène.

Par résine fonctionnalisée, on entend une résine sur laquelle est greffée une ou plusieurs fonctions, directement ou via l'intermédiaire d'un espaceur. Par espaceur, on entend par exemple une chaîne alkyle en C₁ à C₁₅, linéaire ou ramifiée, ou une chaîne aralkyle, par exemple une chaîne 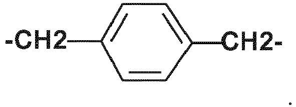 De préférence, l'espaceur est une chaîne alkyle en C₁ à C₁₅, linéaire ou ramifiée. On entend également une chaîne alkyle en C₁ à C₁₅, linéaire ou ramifiée, ou une chaîne aralkyle, dans laquelle un ou plusieurs atomes de carbone peuvent être remplacés par un atome d'azote.

Par aralkyle, on entend une chaîne aryl-alkyle ou bien une chaîne alkyle-aryle-alkyle.

Par aryle, on entend notamment un radical phényl. Par alkyle, on entend ici notamment une chaîne alkyle en C₁ à C₁₅, linéaire ou ramifiée, par exemple un radical méthyle ou un radical éthyle.

Par amine primaire, on entend une fonction amine dans laquelle l'atome d'azote est lié à 2 atomes d'hydrogène. Par amine secondaire, on entend une fonction amine dans laquelle l'atome d'azote est lié à un seul atome d'hydrogène.

De préférence, le procédé comprend en outre les étapes de :
(iii) éliminer le matériau fonctionnalisé ;
(iv) éliminer le solvant.

L'étape (iii) peut être réalisée par toute méthode de séparation connue et adaptée pour éliminer un matériau selon l'invention. De préférence, l'élimination du matériau est effectuée par filtration.

L'étape (iv) peut être réalisée par toute méthode de séparation connue et adaptée pour éliminer le solvant utilisé. Par exemple, l'élimination du solvant est réalisée par évaporation sous vide.

De préférence, l'invention a pour objet la purification de polyesters choisis parmi un polycaprolactone (PCL), un polymère d'acide lactique (PLA), un polymère d'acide lactique et glycolique (PLGA), un polymère d'acide glycolique (PGA).

De préférence, le polyester est un polymère d'acide lactique (PLA) ou un polymère d'acide lactique et d'acide glycolique (PLGA).

De manière plus préférée, le polyester est un polymère ayant une masse comprise entre 500 et 50 000 Dalton, plus particulièrement entre 1 000 et 20 000 Dalton.

De manière encore plus préférée, le polyester est un PLA.

De préférence, le matériau fonctionnalisé est une résine fonctionnalisée par une ou des fonctions amine primaire.

De préférence, la résine fonctionnalisée utilisée dans l'étape (ii) est de formule (I)

S-L (I)

dans laquelle L est une chaîne alkyle en C₁ à C₁₅ linéaire ou ramifiée,
dans laquelle un ou plusieurs atomes de carbone sont remplacés par un atome d'azote, étant donné que deux atomes de carbone successifs ne peuvent être remplacés tous deux par un atome d'azote, et
étant donné qu'au moins un atome de carbone terminal est remplacé par un atome d'azote,
et S est un support adapté.

Il est entendu que la valence des atomes est respectée. Par exemple, un groupe -(CH₂)-, un groupe 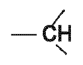 ou un groupe -(CH₃) de la chaîne alkyle peut être remplacé respectivement par un groupe -(NH)-, 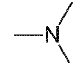 ou -(NH₂).

Dans tous les cas, il est entendu que le point d'accroche de L au support S est un atome de carbone.

Il est également entendu que deux atomes de carbone successifs ne peuvent être tous deux remplacés par un atome d'azote.

De préférence, un à quatre atomes de carbone sont remplacés par un atome d'azote. De préférence, un atome de carbone est remplacé par un atome d'azote. Alternativement, deux atomes de carbone sont remplacés chacun par un atome d'azote. Alternativement, trois atomes de carbone sont remplacés chacun par un atome d'azote. Alternativement, quatre atomes de carbone sont remplacés chacun par un atome d'azote.

Par atomes de carbone successifs, on entend deux atomes de carbone liés directement par une liaison covalente.

Par atome de carbone terminal, on entend un atome de carbone en bout de chaîne. Par exemple, dans le cas de la chaîne alkyle linéaire -CH₂-CH₂-CH₂-CH₃, on entend l'atome de carbone du groupe CH₃. Par exemple, dans le cas d'une chaîne alkyle -CH₂-CH(CH₃)₂, on entend les deux carbones des groupes CH₃.

Par support adapté, on entend par exemple un support polystyrène ou polystyrène-divinylbenzène. De préférence, on entend un support polystyrène.

De préférence, la quantité de matériau fonctionnalisé ajouté en (ii) est de 2 à 10 équivalents par rapport au monomère résiduel, de préférence de 4 à 6 équivalents. De préférence, l'étape (ii) est suivie d'une étape d'agitation comprise entre 4h et 48h, de préférence, de 4h à 24h, de manière plus préférée de 15 à 20h.

De préférence, l'étape (ii) (ainsi que l'étape préférée d'agitation) est réalisée à une température comprise entre 10 et 50°C, de préférence, entre 15 et 25°C, de préférence à température ambiante.

De préférence, le procédé de purification de polyester comprenant des impuretés, ces impuretés comprenant en outre au moins 0,1 % en poids de polyester de catalyseur acide résiduel, comprend en outre l'étape de :
(i) ajouter au polyester dans un solvant une résine échangeuse d'anions de type base faible.

Par catalyseur acide résiduel, on entend par exemple un système catalytique tel que décrit dans la demande WO 2004/067602. Par exemple, la réaction est effectuée en présence d'un catalyseur de formule 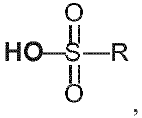 dans laquelle R représente un haloalkyle. Par haloalkyle, on entend un radical alkyl substitué par un ou plusieurs atomes d'halogène. Le radical alkyle comprend de 1 à 6 atomes de carbones, de préférence, de 1 à 4 atomes de carbone. L'atome d'halogène est choisi parmi F, Cl, Br et I. Par exemple, l'haloalkyle est C₂F₅ ou CF₃. De préférence, l'haloalkyle est CF₃.

Par résine échangeuse d'anion de type base faible, on entend tout type de résine échangeuse d'anion permettant d'éliminer le catalyseur acide résiduel. Par exemple, la résine est choisie parmi les résines commerciales suivantes : Amberlyst® A21, Dowex™ 66, Dowex Monosphere™ 66, Dowex Monosphere 77, Dowex Marathon™ WBA, Dowex Marathon WBA-2, Dowex Upcore™ Mono WB-500, Dowex M-43, Dowex M4195, Amberlite™ FPA51, Amberlite FPA53, Amberlite FPA55, Amberlite IRA67, Amberlite IRA96, Amberlite IRA96SB, Amberlite PWA7, Amberlite PWA8, Amberlite PWA10, Amberlite CR5550, IMAC HP661, ou la XUS 43568.00, de préférence parmi les résines Amberlyst® A21, Dowex™ 66, Amberlite FPA53, Amberlite FPA55, Amberlite CR5550 ou IMAC HP661.

De préférence, la résine échangeuse d'anion est de type amine tertiaire, c'est-à-dire que la résine est fonctionnalisée par une ou plusieurs fonctions amines tertiaires. Ces résines permettent un excellent respect des propriétés du polyester.

Par amine tertiaire, on entend une fonction amine qui n'est liée à aucun atome d'hydrogène.

Par exemple, la résine échangeuse d'anion de type amine tertiaire est choisie parmi l'Amberlyst® A21, Dowex™ 66, Amberlite FPA53, Amberlite FPA55, Amberlite CR5550 ou l'IMAC HP661

Par exemple, la résine est l'Amberlyst® A21.

De préférence, la résine est préparée avant utilisation conformément aux recommandations du fabricant. Par exemple, la résine peut être conditionnée avec le solvant du mélange à traiter, par exemple, avec le dichlorométhane. Par exemple, la résine peut être séchée selon toute méthode de séchage utilisée traditionnellement, par exemple, un séchage sous vide ou par lavage via un solvant ou mélange de solvants tel qu'un alcool (méthanol, éthanol, 2-propanol) ou un hydrocarbure saturé tel que l'heptane.

De préférence, la résine échangeuse d'anion est ensuite éliminée par filtration.

De préférence, l'étape (i) est répétée une seconde fois.

La présente invention a également pour objet un procédé de (co)polymérisation de polyesters comprenant les étapes de :
(a) mettre en présence le ou les monomères avec un catalyseur acide dans un solvant ;
(b) traiter le polyester obtenu selon l'étape (i) telle que définie précédemment ;
(c) traiter le polyester obtenu selon les étapes (ii) à (iv) telles que définies précédemment.

Selon le polyester souhaité, la réaction est réalisée à partir d'un monomère lactide et d'un monomère glycolide, à partir d'un monomère lactide seul, à partir d'un monomère ε-caprolactone, ou de tout autre monomère approprié. Selon un mode de réalisation, le monomère est le lactide. Selon un autre mode de réalisation, la réaction est une copolymérisation et la réaction est réalisée à partir de lactide et de glycolide.

De préférence, l'étape (a) est réalisée à une température comprise entre la température ambiante, c'est-à-dire environ 25°C, et la température d'ébullition du solvant choisi. La température de réaction est choisie de manière à être inférieure à la température de dégradation du polymère formé. Les polymères formés ont généralement une température de dégradation comprise entre 250 et 350°C, en fonction de leur masse molaire. Par exemple, la température de réaction est de 0 à 150°C. De préférence, la température est de 10 à 90°C. De préférence encore, la température est de 15 à 45° C, de préférence de 20 à 30° C. Par exemple, la réaction est réalisée à température ambiante.

La réaction est arrêtée dans l'étape (b) une fois le degré de polymérisation souhaité obtenu. Par exemple, la réaction est arrêtée quand la consommation du monomère initial est de 90 à 100 %. De manière préférée, la réaction est arrêtée quand la consommation du monomère initial est supérieure à 94 %.

Le taux de conversion est suivi selon toute méthode connue de l'homme du métier. Par exemple, la conversion du monomère initial en polymère est suivie par prélèvements réguliers d'un échantillon de solution qui est concentré, redissout dans du CDCl₃, et contrôlé par RMN ¹H ou par UPLC.

Dans la présente invention, la réaction de polymérisation est arrêtée par ajout de la résine selon l'étape (i).

De préférence, la résine selon l'étape (i) est ensuite éliminée par filtration.

De préférence, l'étape (i) est répétée et la résine échangeuse d'anion est de nouveau éliminée par filtration.

Le procédé de purification selon l'invention peut être adapté à tout procédé de synthèse de polyesters présentant le même problème de monomère et/ou catalyseur résiduel.

Notamment, il peut être adapté aux procédés de préparations de polymères tels que décrits dans les demandes de brevet WO2012/066194, WO2012/066195 ou WO2004/067602.

La partie expérimentale suivante est présentée pour illustrer les procédures ci-dessus et ne doit en aucun cas être considérée comme une limite à la portée de l'invention.

### PARTIE EXPERIMENTALE

La synthèse du polymère est réalisée en solution (mélange dichlorométhane (DCM)/toluène) en présence d'un amorceur et d'un catalyseur acide. A la fin de la réaction le catalyseur est éliminé par traitement du milieu réactionnel avec une résine basique (Amberlyst^{®} 21). Il est donc ajouté une étape avec une résine comportant une fonction amino. Le PLA, exempt de catalyseur et de monomère, est récupéré après filtration et élimination sous pression réduite des solvants de réaction.

### Exemple 1

Trois résines différentes ont été testées sur un lot de PLA de très bas poids moléculaire contenant 0,41 % de lactide résiduel:
La résine (2-aminoéthyl) polystyrène (résine 1, 0,8-1,2 mmol/g)
La résine N-(2-aminoéthyl)-aminomethyl polystyrène (résine 2, 3,1-3,5 mmol/g)

La résine Tris-(2-aminoéthyl)-amine polystyrène (résine 3, 3,0 mmol/g)

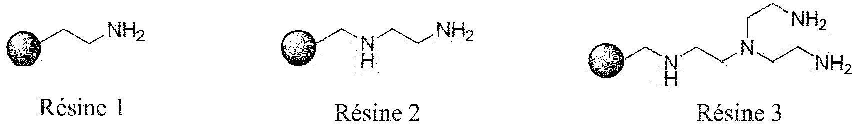

Les échantillons de PLA, en solution dans un mélange DCM/toluène 7/3, sont agités pendant 18h en présence de 4 équivalents de résine par rapport à la quantité de lactide résiduel. L'analyse par SEC des polymères traités ne montre aucune évolution des masses moyennes. L'analyse par RMN ¹H ne permet plus de détecter le lactide et confirme la conservation de l'intégrité structurale du PLA.

| | | | |
|---|---|---|---|
| Résine | 1 | 2 | 3 |
| Taux lactide (%) | 0,02 | 0,11 | 0,08 |

Cette méthode de purification a été validée sur un procédé complet de synthèse de PLA à l'échelle de 40 mmoles (5,76 g de lactide). En fin de réaction, le catalyseur est éliminé par deux lavages avec la résine Amberlyst^{®} 21. A ce niveau le taux de lactide résiduel est de 0,40 %. Un lavage supplémentaire avec la résine 1 ramène le taux de lactide résiduel à 0,03 % (dosage UPLC).

### Exemple 2

Un gramme de PLA en solution dans 10 mL d'un mélange DCM/toluène 7/3 est agité à température ambiante sous atmosphère inerte pendant 18h en présence de 50 mg (4,0 équivalents) de résine 3 de l'exemple 1.

La résine est éliminée par filtration et le solvant éliminé sous pression réduite à siccité.

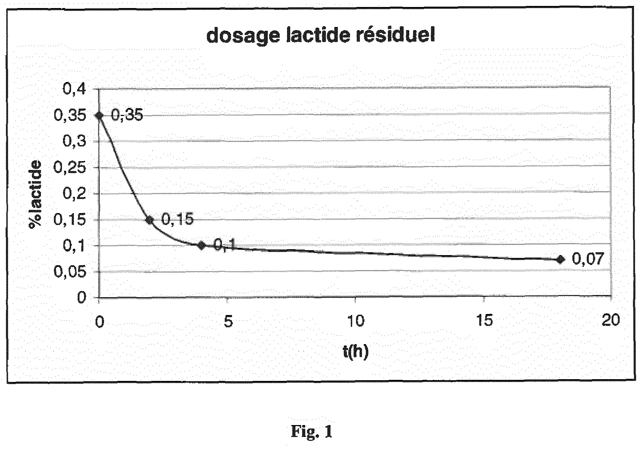

Le lactide résiduel dans le PLA est dosé par UPLC. La figure 1 donne le taux de lactide en fonction du temps d'agitation.

Après 18h le taux de lactide est ramené de 0,35 % à 0,07 %.

La même expérience est réalisée en présence de 6 équivalents de résine (75 mg pour 1,0g de PLA). Après 18h le taux de lactide est légèrement amélioré et est ramené à 0,06 %.

L'analyse des échantillons par SEC ne montre aucune modification des masses moyennes du PLA après le traitement par la résine (18h).

| | Mn (g/mol) | Mw (g/mol) | IP |
|---|---|---|---|
| Avant traitement | 990 | 1170 | 1,17 |
| 4 équiv | 980 | 1150 | 1,18 |
| 6 équiv | 980 | 1160 | 1,18 |

L'analyse par RMN ¹H (300 MHz) des échantillons de PLA traités ne permet pas de détecter les traces de lactide < 0.1 %.

La structure du polymère n'est pas affectée par le lavage avec la résine. Le spectre RMN ¹H reste inchangé après le traitement.

### Exemple 3

Une solution de 850mg de PLGA 50/50 contenant 1,0% en poids de D,L-lactide (Mn = 5680, PDI = 1,72) dans un mélange DCM/toluène 5/3 est agité à température ambiante pendant 18h en présence de 75 mg (3 équivalents) de résine 2.

L'analyse par RMN ¹H (300 MHz) de l'échantillon de PGLA ainsi traité montre une teneur en lactide résiduel < 0,1 % (seuil de détection de la RMN)

### Exemple 4

Le toluène et le dichlorométhane sont séchés sur tamis moléculaire activé sous atmosphère inerte. Le lactide est recristallisé sous atmosphère inerte dans le toluène distillé. Le dodécanol est séché sous pression réduite. L'acide trifluorométhanesulfonique est distillé sous vide. La résine Amberlyst^{®}21 est séchée sous vide en présence de P₂O₅ puis est stockée sous atmosphère inerte.

De l'acide triflique (50 µL, 0,5 mmol) est ajouté à une solution de lactide (4,32 g, 30,0 mmol) et de dodécanol (1,86 g, 10,0 mmol) dans le dichlorométhane (15 mL). Le milieu réactionnel est agité à température ambiante pendant 18h.

1,0g de résine Amberlyst^{®} 21 est ajouté. Puis le milieu est agité pendant 1h, puis filtré. 0,5 g de résine sont ajoutés à la solution précédente. Le milieu est agité pendant 1h puis filtré

| | |
|---|---|
| RMN ¹H : | Conforme. Détection de lactide résiduel. |
| SEC | Mw = 957 g/mol, IP = 1,18. |
| UPLC | Taux de lactide résiduel : 0,37 % |

La solution de PLA exempte de catalyseur est agitée avec 1,5 g de résine PS-A-NH₂ (résine 1 de l'exemple 1) pendant 17h. La résine est éliminée par filtration et les solvants éliminés sous pression réduite. Le PLA est ensuite séché sous vide à 50°C pendant la nuit (m = 6,10g, 98,7 %).

| | |
|---|---|
| RMN ¹H : | Conforme. Lactide non détectable. |
| SEC | Mw = 952 g/mol, IP = 1,18. |
| UPLC | Taux de lactide résiduel : 0,08 % |

## Revendications

1. Procédé de purification de polyester comprenant des impuretés, ces impuretés comprenant au moins 0,1 % en poids de polyester du ou des monomères résiduels, comprenant au moins l'étape de :
(ii) ajouter au polyester dans un solvant un matériau fonctionnalisé choisi parmi une résine fonctionnalisée par une ou des fonctions amine primaire et/ou secondaire.

2. Procédé selon la revendication 1 comprenant en outre les étapes de :
(iii) éliminer le matériau fonctionnalisé;
(iv) éliminer le solvant.

3. Procédé selon l'une des revendications 1 ou 2, dans lequel le polyester est choisi parmi un polycaprolactone (PCL), un polymère d'acide lactique (PLA), un polymère d'acide lactique et glycolique (PLGA), et un polymère d'acide glycolique (PGA).

4. Procédé selon l'une des revendications 1 à 3, dans lequel le polyester est un polymère d'acide lactique (PLA) ou un polymère d'acide lactique et d'acide glycolique (PLGA).

5. Procédé selon l'une des revendications 1 à 4, dans lequel le matériau fonctionnalisé est une résine, de préférence une résine fonctionnalisée par une ou des fonctions amine primaire.

6. Procédé selon la revendication 5, dans lequel la résine fonctionnalisée utilisée dans l'étape (ii) est de formule (I)
S-L (I)
dans laquelle L est une chaîne alkyle en C₁ à C₁₅ linéaire ou ramifiée ou une chaîne aralkyle, dans laquelle un ou plusieurs atomes de carbone est remplacé par un atome d'azote,
étant donné que deux atomes de carbone successifs ne peuvent être remplacés tous deux par un atome d'azote, et
étant donné qu'au moins un atome de carbone terminal est remplacé par un atome d'azote,
et S est un support adapté.

7. Procédé selon la revendication 6, dans lequel S est un support polystyrène, ou po lystyrène-divinylbenzène.

8. Procédé selon l'une des revendications 1 à 7, dans lequel l'étape (iii) est réalisée par filtration.

9. Procédé selon l'une des revendications 1 à 8, dans lequel l'étape (iv) est réalisée par séchage, de préférence par évaporation sous vide.

10. Procédé selon l'une des revendications 1 à 9 de purification de polyester comprenant des impuretés, ces impuretés comprenant en outre au moins 0,1 % en poids de polyester de catalyseur résiduel, comprenant en outre l'étape :
(i) ajouter au polyester dans un solvant une résine échangeuse d'anions de type base faible.

11. Procédé selon la revendication 10, dans lequel l'étape (i) est répétée une seconde fois.

12. Procédé selon l'une des revendications 10 à 11, dans lequel la résine échangeuse d'anion est ensuite éliminée par filtration.

13. Procédé de (co)polymérisation de polyesters comprenant les étapes de :
(a) mettre en présence le ou les monomères avec un catalyseur acide dans un solvant ;
(b) traiter selon l'étape (i) telle que définie dans les revendications 10 à 12 le polyester obtenu;
(c) traiter selon les étapes (ii) à (iv) telles que définies dans les revendications 1 à 9 le polyester obtenu.

## Patentansprüche

1. Verfahren zur Reinigung von Polyester, der Verunreinigungen umfasst, wobei diese Verunreinigungen, bezogen auf den Polyester, wenigstens 0,1 Gew.-% restliche(s) Monomer(e) umfassen, wobei das Verfahren wenigstens den folgenden Schritt umfasst:
(ii) Zusetzen eines funktionalisierten Materials, ausgewählt aus einem Harz, das durch ein oder mehrere primäre und/oder sekundäre Amin-Funktionen funktionalisiert ist, zu dem Polyester in einem Lösungsmittel.

2. Verfahren nach Anspruch 1, das außerdem die folgenden Schritte umfasst:
(iii) Eliminieren des funktionalisierten Materials,
(iv) Eliminieren des Lösungsmittels
umfasst.

3. Verfahren nach Anspruch 1 oder 2, bei dem der Polyester aus einem Polycaprolacton (PCL), einem Milchsäurepolymer (PLA), einem Polylactid-co-Glycolid (PLGA) und einem Glycolsäurepolymer (PGA) ausgewählt ist.

4. Verfahren nach einem der Ansprüche 1 bis 3, bei dem der Polyester ein Milchsäurepolymer (PLA) oder ein Polylactid-co-Glycolid (PLGA) ist.

5. Verfahren nach einem der Ansprüche 1 bis 4, bei dem das funktionalisierte Material ein Harz, vorzugsweise ein Harz, das durch ein oder mehrere primäre Amin-Funktionen funktionalisiert ist, ist.

6. Verfahren nach Anspruch 5, bei dem das funktionalisierte Harz, das in Schritt (ii) verwendet wird, die Formel (I) hat:
S-L (I)
wobei L eine lineare oder verzweigte C₁- bis C₁₅-Alkylkette oder eine Aralkylkette, in der ein oder mehrere Kohlenstoffatom(e) durch ein Stickstoffatom ersetzt ist/sind, ist,
unter der Maßgabe, dass nicht zwei aufeinanderfolgende Kohlenstoffatome beide durch ein Stickstoffatom ersetzt sein können, und
unter der Maßgabe, dass wenigstens ein terminales Kohlenstoffatom durch ein Stickstoffatom ersetzt ist,
und S ein passender Träger ist.

7. Verfahren nach Anspruch 6, bei dem S ein Polystyrol- oder Polystyrol-Divinylbenzol-Träger ist.

8. Verfahren nach einem der Ansprüche 1 bis 7, bei dem Schritt (iii) mittels Filtration durchgeführt wird.

9. Verfahren nach einem der Ansprüche 1 bis 8, bei dem Schritt (iv) mittels Trocknen, vorzugsweise durch Verdampfen unter Vakuum, durchgeführt wird.

10. Verfahren nach einem der Ansprüche 1 bis 9 zur Reinigung von Polyester, der Verunreinigungen umfasst, wobei diese Verunreinigungen, bezogen auf den Polyester, außerdem wenigstens 0,1 Gew.-% restlichen Katalysator umfassen, wobei das Verfahren außerdem den folgenden Schritt umfasst:
(i) Zusetzen eines Anionen-Austauschharzes vom Typ schwache Base zu dem Polyester in einem Lösungsmittel.

11. Verfahren nach Anspruch 10, bei dem Schritt (i) ein zweites Mal wiederholt wird.

12. Verfahren nach einem der Ansprüche 10 bis 11, bei dem das AnionenAustauschharz dann durch Filtration entfernt wird.

13. Verfahren zur (Co)Polymerisation von Polyestern, umfassend die Schritte:
(a) Zusammengeben des Monomers oder der Monomeren mit einem sauren Katalysator in einem Lösungsmittel;
(b) Behandeln des erhaltenen Polyesters gemäß Schritt (i), wie sie in den Ansprüchen 10 bis 12 definiert ist;
(c) Behandeln des erhaltenen Polyesters gemäß den Schritten (ii) bis (iv), wie sie in den Ansprüchen 1 bis 9 definiert sind.

## Claims

1. Method for purifying polyester containing impurities, which impurities comprise at least 0.1% by weight of polyester of one or several residual monomers, including at least one step for:
(ii) adding to the polyester in a solvent, a functionalized material chosen from a resin functionalized by one or several primary and/or secondary amine functions.

2. Method according to claim 1 also including steps for:
(iii) eliminating the functionalized material;
(iv) eliminating the solvent.

3. Method according to one of claims 1 or 2 in which the polyester is chosen from a polycaprolactone (PCL), a lactic acid polymer (PLA), a lactic and glycolic acid polymer (PLGA) and a glycolic acid polymer (PGA).

4. Method according to one of claims 1 to 3 in which the polyester is a lactic acid polymer (PLA) or a lactic acid and glycolic acid polymer (PLGA).

5. Method according to one of claims 1 to 4 in which the functionalized material is a resin, preferably a resin functionalized by one or several primary amine functions.

6. Method according to claim 5, in which the functionalized resin used in step (ii) is of formula (I):
S-L (1)
in which L is a C1 to C15 linear or ramified alkyl chain or an aralkyl chain, in which one or several carbon atoms are replaced by a nitrogen atom,
while considering that two successive carbon atoms cannot both be replaced by one nitrogen atom, and
while considering that at least one terminal carbon atom is replaced by one nitrogen atom,
and S is a suitable support.

7. Method according to claim 6 in which S is a polystyrene or polystyrene-divinyl benzene support.

8. Method according to one of claims 1 to 7 in which step (iii) is obtained by filtration.

9. Method according to one of claims 1 to 8, in which step (iv) is obtained by drying, preferably by vacuum evaporation.

10. Method according to one of claims 1 to 9 for purifying polyester containing impurities, which impurities also contain at least 0.1% by weight of polyester of residual catalyser, also including the step for:
(i) adding to the polyester in a solvent, an anionic exchange resin of the low alkali type.

11. Method according to claim 10 in which step (i) is repeated a second time.

12. Method according to one of claims 10 to 11, in which the anionic exchanging resin is then eliminated by filtration.

13. Method for (co-)polymerising polyesters including steps for:
(a) bringing the monomer or monomers into the presence of an acid catalyst in a solvent;
(b) processing the polyester obtained according to step (i) as defined in claims 10 to 12; and
(c) processing the polyester obtained according to the steps (ii) to (iv) as defined in claims 1 to 9.
